# EUROPÄISCHE PATENTSCHRIFT

(11) **EP 0 425 816 B1**
(45) Veröffentlichungstag und Bekanntmachung des Hinweises auf die Patenterteilung: **28.07.1993**
(21) Anmeldenummer: 90118555.3
(22) Anmeldetag: 27.09.1990
(51) Int. Cl.: A61C 5/02

(54) **Klemmgriff für Zahnwurzelkanal-Instrumente**
Clamping handle for endodontic instruments
Manche de serrage pour instruments endodontiques

(30) Priorität: 31.10.1989 DE 3936211
(43) Veröffentlichungstag der Anmeldung: 08.05.1991
(73) Patentinhaber: Vereinigte Dentalwerke Antaeos Beutelrock Zipperer Zdarsky Ehrler GmbH & Co. KG, 81319 München (DE)
(72) Erfinder: Reiter, Johann, W-8000 München 70 (DE); Schottenheim, Karl, W-8000 München 70 (DE)
(74) Vertreter: WILHELMS, KILIAN & PARTNER Patentanwälte

(56) Entgegenhaltungen:
- CH-A- 479 289
- GB-A- 900 065

## Beschreibung

Die Erfindung betrifft einen Klemmgriff zur Halterung eines Zahnwurzelkanal-Instrumentes gemäß dem Oberbegriff des Patentanspruches 1.

Bei einem bekannten Klemmgriff dieser Art (DE-PS 34 03 654) ist ein an einem Griffkörper ausgebildeter Schraubkopf mit einem Aufschraubgewinde ausgerüstet, worauf eine Schraubkappe aufschraubbar ist. Griffkörper, Schraubkopf und Schraubkappe sind von einer Axialbohrung durchsetzt und zwischen Schraubkopf und Schraubkappe befindet sich ein Klemmorgan, das beim Verschrauben der Schrauborgane an einen in die Axialbohrung eingesetzten Instrumentenschaft anpreßbar ist. Dieses Klemmorgan ist eine den Instrumentenschaft lose umschließende und zum Schraubgewinde entgegengesetzt gängige Schraubenfeder, die mit ihren Enden in Aufnahmebohrungen in den Schrauborganen festsitzt. Beim Verschrauben der Schraubkappe mit dem Schraubkopf wird diese Schraubenfeder an ihren Enden mitgenommen und eingedreht, so daß sich ihre Schraubenwindungen fest um den Instrumentenschaft schlingen und diesen einklemmen. Die Herstellung der Schraubenfeder und ihre Einpassung in die Aufnahmebohrungen erfordert für eine sichere Klemmwirkung sowie eine leichte Betätigung der Schraubkappe besondere Sorgfalt, wodurch sich auch die Herstellungskosten dieses Klemmgriffes erhöhen. Ein anderer Klemmgriff gleicher Bauart sieht anstelle der Schraubenfeder als Klemmorgan eine Klemmscheibe (DE-PS 27 03 637) vor, die mit einer zur Scheibenebene geneigten, jedoch auf die Axialbohrung des Griffkörpers ausgerichteten Durchsteckbohrung für den Instrumentenschaft versehen ist. Beim Verschrauben der Schrauborgane wird die Klemmscheibe aus ihrer geneigten Ausgangsstellung aufgerichtet und ihre Bohrung gegenüber dem Instrumentenschaft verkantet, wodurch dieser verklemmt wird. Auch in diesem Falle ist das Herstellen einer solch kleinen Klemmscheibe schwierig, da bereits kleinste Abweichungen von den Vorgabemaßen zu einer Beeinträchtigung der Klemmwirkung führen.

Der Erfindung liegt daher die Aufgabe zugrunde, einen Klemmgriff zur Halterung eines Zahnwurzelkanal-Instrumentes zu schaffen, dessen Klemmorgan sich einfacher und dadurch preiswerter herstellen läßt und das zudem eine wirksamere Verklemmung des Instrumentes gewährleistet.

Diese Aufgabe wird gemäß der Erfindung an einem Klemmgriff der eingangs genannten Art durch die Kennzeichnungsmerkmale des Patentanspruches 1 gelöst.

Vorteilhafte Weiterentwicklungen der Erfindung sind in Unteransprüchen erwähnt.

Die das Klemmorgan bildenden Klemmhülsen lassen sich von einem handelsüblichen Profilstab oder -rohr einfach und preiswert ablängen, wobei auf die Beschaffenheit ihrer Schrägflächen keine besonderen Anforderungen gestellt werden müssen. Wegen der Übereinstimmung der beiden Klemmhülsen eines Klemmorganes beschränkt sich die Fertigung auf eine Hülsengröße. Diese Klemmhülsen lassen sich auch leicht zwischen den Schrauborganen mit aneinanderliegenden Schrägflächen einsetzen. Da diese Schrägflächen sich beim Verschrauben der Schrauborgane über einen ausreichenden Bereich verschieben können, werden die Klemmhülsen auch dann mit dem Instrumentenschaft sicher verklemmt, wenn sie Fertigungsabweichungen aufweisen sollten. Die erreichte Klemmwirkung ist dauerhaft, bis die Schraubkappe wieder gelockert wird. Infolge der verhältnismäßig langen Klemmflächen in den Hülsenbohrungen entstehen am eingeklemmten Instrumentenschaft auch keine Riefen, so daß dieser geschont wird.

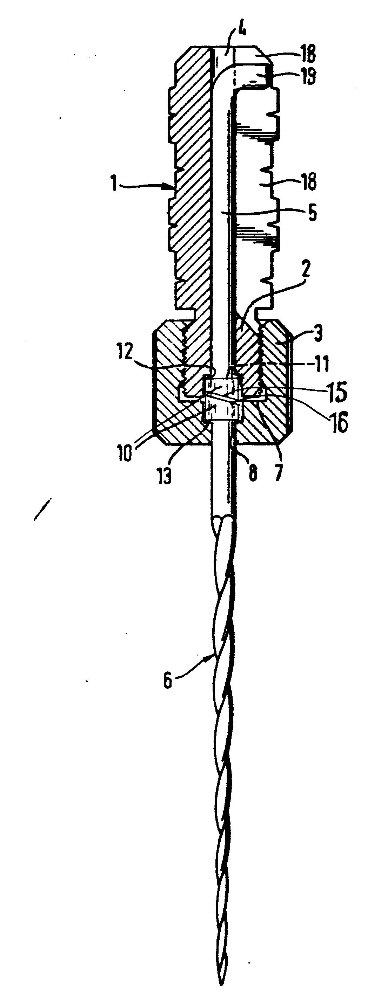

Die Erfindung wird nachfolgend anhand eines Ausführungsbeispieles, das auch in der Zeichnung im Schnitt dargestellt ist, näher beschrieben.

Der dargestellte Klemmgriff besteht aus einem Griffkörper 1 mit einem daran ausgebildeten Schraubkopf 2 und einer darauf aufschraubbaren Schraubkappe 3. Griffkörper 1 und Schraubkopf 2 weisen eine Axialbohrung 4 auf, in der ein Instrumentenschaft 5 eines Zahnwurzelkanal-Instrumentes 6 mit leichtem Spiel geführt und verschiebbar ist. Auch in einer Deckenwand 7 der Schraubkappe 3 setzt sich diese Axialbohrung als Bohrung 8 fort, die auch geringfügig größer als die Axialbohrung 4 sein kann. Um das eingesetzte Instrument in einer gewünschten Arbeitsstellung festzuklemmen, sind zwischen Schraubkopf 2 und Schraubkappe 3 zwei Klemmhülsen 10 als Klemmorgan eingesetzt. Die Bohrungen 11 dieser Klemmhülsen haben einen etwas größeren Durchmesser als der Instrumentenschaft, so daß sich die Hülsen mit Spiel seitlich verschieben können. Zum Halten der Klemmhülsen können im Schraubkopf und in der Schraubkappe zweckmäßig gegenüberliegende Aufnahmebohrungen 12,13 mit ebenfalls etwas größerem Durchmesser ausgebildet sein, in die die Klemmhülsen mit ihren Enden einsetzbar sind. Die Tiefe dieser Aufnahmebohrungen kann variieren, sie darf aber nicht so groß sein, daß die beiden Schrauborgane 2,3 mit ihren Stirnflächen in Klemmstellung zum Anschlag kommen können. Vorteilhaft sind diese Aufnahmebohrungen so tief, daß die Klemmhülsen darin auch ohne eingesetztes Instrument einen sicheren Sitz finden und beim Aufschrauben der Schraubkappe auf den Schraubkopf nicht umkippen. Damit die Klemmhülsen ein Verklemmen des Instrumentes bewirken, sind diese Klemmhülsen mit Schrägflächen 15,16 versehen, die in eingesetzter Stellung aneinanderliegen. Ihr Neigungswinkel zur Hülsenbohrung ist zweckmäßig etwa 45°.

Um ein in den Klemmgriff eingeführtes Instrument 6 auf eine bestimmte Arbeitslänge einzustellen, wird zunächst das Instrument bei gelockerter Schraubkappe 3 in die gewünschte Stellung geschoben und dann die Schraubkappe festgeschraubt. Dadurch werden die Klemmhülsen 10 mit ihren Schrägflächen 15,16 gegeneinandergedrückt und seitlich entgegengesetzt verschoben, wodurch die Klemmhülsenbohrungen gegen den Instrumentenschaft gepreßt und dadurch der Instrumentenschaft festgeklemmt wird. Da die Klemmhülsen sehr wirksam ansprechen, genügen bereits kleine Aufschraubbewegungen an der Schraubkappe für eine ausreichende Klemmwirkung, wie andererseits schon bei geringem Zurückdrehen der Schraubkappe diese Klemmwirkung wieder aufgehoben wird.

Wenn beim gezeigten Ausführungsbeispiel der Griffkörper einen Längsschlitz 18 aufweist, um darin einen abgewinkelten Instrumentenschaft 19 gegen Verdrehung zu sichern und um die Längeneinstellung des Instrumentes kontrollieren zu können, so sollen damit andere Griffkörper nicht ausgeschlossen sein. Die erfindungsgemäße Klemmwirkung ist auch nicht auf Meßgriffe für Handgeräte beschränkt. Auch in Einsatz- oder Winkelstücken für hand- oder motorgetriebene Geräte ist sie in gleicher Weise brauchbar. Die Teile können aus Kunststoff, Metall oder aus beiden Materialien gefertigt sein. Um die Handhabung zu erleichtern, ist der Griffkörper und/oder die Schraubkappe mit einer Rändelung oder Kordelung versehen.

## Patentansprüche

1. Klemmgriff zur Halterung eines Zahnwurzelkanalinstrumentes mit einem Griffkörper (1), einem daran ausgebildeten Schraubkopf (2) mit einem Aufschraubgewinde, einer damit verschraubbaren Schraubkappe (3), einer diesen Schraubkopf (2) und die Schraubkappe (3) durchsetzenden Axialbohrung (4,8) sowie mit einem das eingesetzte Instrument umschließenden Klemmorgan, das beim Verschrauben der Schraubkappe an den Instrumentenschaft anpreßbar ist, dadurch gekennzeichnet, daß zwischen dem Schraubkopf (2) und der Schraubkappe (3) als Klemmorgan den Instrumentenschaft (5) lose umschließende Klemmhülsen (10) vorgesehen sind, deren aneinanderliegende Schrägflächen (15,16) beim Aufschrauben der Schraubkappe (3) zum seitlichen Verschieben der Klemmhülsen (10) gegeneinander aneinanderdrückbar sind.

2. Klemmgriff nach Anspruch 1, dadurch gekennzeichnet, daß die Klemmhülsen (10) in zylindrische Aufnahmebohrungen (12,13) von Schraubkopf (2) und Schraubkappe (3) eingesetzt sind.

3. Klemmgriff nach Anspruch 1 oder 2, dadurch gekennzeichnet, daß die Durchmesser der Aufnahmebohrungen (12,13) geringfügig größer als die Außendurchmesser der Klemmhülsen (10) sind.

4. Klemmgriff nach einem der Ansprüche 1 bis 3, dadurch gekennzeichnet, daß die Schrägflächen (15,16) der Klemmhülsen (10) in einem Winkel von etwa 45° zur Hülsenachse ausgebildet sind.

## Claims

1. Clamping handle for holding a dental root canal instrument with a handle body (1), a screw head (2) formed thereon with a screw-thread, a screw cap (3) screwable thereto, an axial boring (48) penetrating through the screw head (2) and the screw cap (3), and a clamping device encompassing the inserted instrument, which during the screwing up of the screw head is pressable onto the shaft of the instrument, characterized in that between the screw head (2) and the screw cap (3) split taper sockets (10) loosely encompassing the instrument shaft (5) are provided as clamping means, whose adjacent sloping surfaces (15, 16) during the unscrewing of the screw cap (3) is pressable against one another in order to achieve a lateral displacement of the split taper sockets (10).

2. Clamping handle according to claim 1, characterized in that the split taper sockets (10) are inserted into cylindrical location holes (12, 13) of the screw head (2) and the screw cap (3).

3. Clamping handle according to claim 1 or claim 2, characterized in that the diameters of the location holes (12, 13) are slightly larger than the outside diameter of the split taper sockets (10).

4. Clamping handle according to one of the claims 1 to 3, characterized in that the sloping surfaces (15, 16) of the split taper sockets (10) are formed with an angle of about 45° with respect to the socket axis.

## Revendications

1. Poignée de serrage, pour la fixation d'un instrument à canal de racines de dent, avec un corps de poignée (1), une tête de vis (2) réalisée sur celui-ci, avec un filetage de vissage, un capuchon de vis (3) susceptible d'être vissé avec la tête de vis, un perçage axial (4, 8) traversant cette tête de vis (2) et le capuchon de vis (3), ainsi qu'un organe de serrage, entourant l'instrument (1) inséré et susceptible d'être pressé sur la tige d'instrument lors du vissage du capuchon de vis,
caractérisée en ce qu'entre la tête de vis (2) et le capuchon de vis (3) sont prévues, à titre d'organes de serrage, des douilles de serrage (10) entourant avec du jeu la tige d'instrument (5), dont les faces obliques (15, 16) placées l'une contre l'autre sont susceptibles d'être pressées l'une sur l'autre lors du vissage du capuchon de vis (3), en vue de déplacer latéralement l'une contre l'autre les douilles de serrage (10).

2. Poignée de serrage selon la revendication 1,
caractérisée en ce que les douilles de serrage, (10) sont insérées dans des alésages de réception (12, 13) cylindriques de la tête de vis (2) et du capuchon de vis (3).

3. Poignée de serrage selon la revendication 1 ou 2,
caractérisée en ce que le diamètre des alésages de réception (12, 13) est légèrement supérieur au diamètre extérieur des douilles de serrage (10).

4. Poignée de serrage selon l'une des revendications 1 à 5,
caractérisée en ce que les faces inclinées (15, 16) des douilles de serrage (10) font un angle d'à peu près 45° par rapport à l'axe de douille.
